# EUROPÄISCHE PATENTSCHRIFT

(11) **EP 3 779 236 B1**
(45) Veröffentlichungstag und Bekanntmachung des Hinweises auf die Patenterteilung: **13.10.2021**
(21) Anmeldenummer: 19192048.7
(22) Anmeldetag: 16.08.2019
(51) Int. Cl.: F16G 3/06, B65G 15/36

(54) **KLEMMVERBINDUNG ZUM ENDLOSEN VERBINDEN EINES FÖRDERGURTS**
CLAMPING CONNECTION FOR THE CONTINUOUS CONNECTION OF A CONVEYOR BELT
RACCORDEMENT DE SERRAGE DESTINÉ AU RACCORDEMENT SANS FIN D'UNE BANDE TRANSPORTEUSE

(43) Veröffentlichungstag der Anmeldung: 17.02.2021
(73) Patentinhaber: BEUMER Group GmbH & Co. KG, 59269 Beckum (DE)
(72) Erfinder: van Essen, Josef, 48324 Sendenhorst (DE)
(74) Vertreter: Philipp, Matthias

(56) Entgegenhaltungen:
- CN-U- 202 418 417
- DE-A1- 2 341 992
- DE-A1- 2 813 130
- DE-U1- 29 621 572

## Beschreibung

Die Erfindung betrifft eine Klemmverbindung zum Verbinden zweier Endabschnitte eines endlos einzurichtenden, eingebettete Zugträger aufweisenden Fördergurts, insbesondere für Gurtbecherwerke, mit zwei gegeneinander verspannbaren, jeweils eine Anlagefläche für einen Endabschnitt des Fördergurts aufweisenden Formstücken, zwischen denen ein Zwischenstück angeordnet ist und jeweils ein Endabschnitt in einem Klemmbereich zwischen dem Zwischenstück und einer Anlagefläche eines Formstücks klemmbar ist, und wobei Enden der Zugträger in einem mit einem Vergussmaterial gebildeten, sich gegen die Formstücke abstützenden Vergussblock festlegbar sind. Eine solche Klemmverbindung ist etwa aus der DE 296 21 572 U1 bekannt.

Eine derartige Klemmverbindung und ein damit endlos eingerichteter Fördergurt haben sich zwar in der Praxis bewährt, stellen jedoch das die Verbindung des Gurts herstellende Personal vor die Aufgabe, das Vergießen der freigelegten Enden der Zugträger des Fördergurts in einem Zustand auszuführen, in dem der Fördergurt in der Förderanlage eingesetzt ist, was häufig aufgrund der beengten Platzverhältnisse schwierig ist. Gleiches gilt für das Verbinden der freigelegten Enden der Zugträger durch Spleißen bzw. Verrödeln, was ebenfalls im eingebauten Zustand erfolgen muss.

Die Erfindung hat sich zur Aufgabe gestellt, eine gattungsgemäße Klemmverbindung dahingehend weiterzuentwickeln, dass die endlose Verbindung der Endabschnitte des Fördergurts vereinfacht wird.

Diese Aufgabe wird erfindungsgemäß zunächst durch eine gattungsgemäße Klemmverbindung zum Verbinden zweier Endabschnitte eines endlos einzurichtenden, eingebettete Zugträger aufweisenden Fördergurts gelöst, die sich dadurch auszeichnet, dass für jeden Endabschnitt des Fördergurts ein eigener, getrennter Vergussblock gebildet ist. Die Erfindung beruht auf der Erkenntnis, dass es zum Herstellen einer stabilen und dauerhaften, zugfesten Verbindung der Endabschnitte eines Fördergurts, insbesondere für Gurtbecherwerke, nicht wesentlich darauf ankommt, dass die Enden der Zugträger eines Endabschnitts mit den Enden der Zugträger des anderen Endabschnitts vergossen und ggf. zusätzlich durch Spleißen bzw. Verrödeln und/oder mittels Seilklemmen miteinander verbunden werden, sondern dass es vollauf genügt, wenn jeweils die Enden der Zugträger lediglich ein und desselben Endabschnitts des Fördergurts in einem Vergussblock vergossen und ggf. zusätzlich durch Spleißen bzw. Verrödeln und/oder mittels Seilklemmen untereinander verbunden werden. Durch die Ausbildung eines eigenen, getrennten Vergussblocks für jeden Endabschnitt des Fördergurts wird der große Vorteil erreicht, dass der gesamte Vergießvorgang, einschließlich der Verbindung der Enden der Zugträger, werkstattseitig erfolgen kann, wobei an der Anlage selbst lediglich noch die Verbindung der Endabschnitte mittels zu verspannender Formstücke herzustellen ist.

Die Anlageflächen können abgerundet sein, beispielsweise im Querschnitt etwa viertelkreisförmig.

Zweckmäßigerweise ist vorgesehen, dass jeder Vergussblock in einem um die freigelegten Enden der Zugträger herum anzuordnenden Vergusskasten ausgebildet ist, der bspw. aus Stahl bestehen kann.

Bevorzugt ist jeder Vergussblock aus einem Vergussmaterial gebildet, das einen hohen Reibungskoeffizienten mit Stahl bzw. mit dem Material, aus dem die Zugträger bestehen, aufweist. Das Vergussmaterial kann ein Metall, Kunststoff oder ein Verbundmaterial sein, ggf. angereichert mit Verstärkungsfasern.

Es kann vorgesehen sein, dass jeweils zwischen einem Vergussblock oder einem Vergusskasten und einem Formstück ein Abstützelement, bspw. Abstützblech, angeordnet ist, das mit dem jeweiligen Vergusskasten verschweißt sein kann. Das Abstützelement kann aus mehreren Teilen, insbesondere zwei Teilen oder Hälften, bestehen, die miteinander verschraubt sein können.

Zweckmäßigerweise sind die Formstücke mit diese durchgreifenden Schraubverbindungen versehen und mittels dieser verspannbar. Hierbei können die Formstücke durchgreifende Dehnschrauben vorgesehen sein, um eine Dehnungsreserve für den Fall vorzusehen, dass die verspannten Endabschnitte des Fördergurts aufgrund ihrer Elastizität geringfügig nachgeben.

Jeder Vergussblock bzw. Vergusskasten kann in Querrichtung des Fördergurts gesehen in mehrere, bspw. zwei, drei, vier oder mehr, einzelne Vergussblockteile bzw. Vergusskastenteile unterteilt sein. Auch jedes Formstück kann in Querrichtung des Fördergurts gesehen in mehrere, bspw. zwei, drei, vier oder mehr, einzelne Formstückteile unterteilt sein. Obwohl jedes einzelne Formstückteil einem einzelnen Vergussblockteil oder Vergusskastenteil zugeordnet sein könnte und in seiner Breite der Breite eines einzelnen Vergussblockteils bzw. Vergusskastenteils entsprechen könnte, ist zweckmäßigerweise eine wechselweise Überlappung von Formstückteilen und Vergussblockteilen bzw. Vergusskastenteilen vorgesehen, wobei die einzelnen Vergussblockteile oder Vergusskastenteile eine Breite aufweisen, die kleiner oder größer als eine Breite der einzelnen Formstückteile ist, so dass es zumindest ein Formstückteil gibt, auf dem sich zwei Vergussblockteile oder Vergusskastenteile wenigstens teilweise abstützen und gewissermaßen überbrückt werden.

Unabhängig davon, ob mehrere Vergussblockteile je Endabschnitt des Fördergurts vorgesehen sind, oder nur ein einzelner Vergussblock bzw. Vergusskasten, kann vorgesehen sein, dass ein Formstück oder beide Formstücke in Querrichtung des Fördergurts gesehen in mehrere Formstückteile unterteilt sind.

Die Aufgabe der Erfindung wird ferner gelöst durch einen Fördergurt mit eingebetteten Zugträgern und zwei Endabschnitten, die mittels einer erfindungsgemäßen Klemmverbindung verbunden und dadurch der Fördergurt endlos eingerichet ist, wobei die Endabschnitte aus einer Verlaufsebene des Fördergurts herausgeführt sind und zwischen den Formstücken und dem Zwischenstück klemmend gehalten sind, wobei sich der Fördergurt dadurch auszeichnet, dass an beiden Endabschnitten des Fördergurts die Zugträger von umgebendem Gurtmaterial freigelegt und jeweils in einem eigenen, getrennten, mit einem Vergussmaterial gefüllten Vergussblock festgelegt sind. Jeder Vergussblock kann in einem Vergusskasten angeordnet sein, und die Zugträger jeweils eines Endabschnitts des Fördergurts können innerhalb des diesem Endabschnitt zugeordneten Vergussblocks miteinander verbunden sein, wie etwa durch Spleißen, Verrödeln und/oder mittels Seilklemmen.

Es kann vorgesehen sein, dass ein oder jeder Vergussblock in Querrichtung des Fördergurts gesehen in mehrere, bspw. zwei, drei, vier oder mehr, einzelne Vergussblockteile unterteilt ist, die jeweils in einzelnen Vergusskastenteilen angeordnet sein können.

Die Aufgabe der Erfindung wird ferner gelöst durch ein Verfahren zum Verbinden zweiter Endabschnitte eines endlos einzurichtenden Fördergurts, der mit eingebetteten Zugträgern versehen ist, wobei die Endabschnitte aus einer Verbindungsebene des Fördergurts herausgeführt werden und zwei mit abgerundeten Anlageflächen versehene Formstücke aufgesetzt und verspannt werden, wobei zwischen den Formstücken ein Zwischenstück angeordnet wird und die Endabschnitte jeweils in einem Klemmbereich zwischen dem Zwischenstück und einer Anlagefläche eines Formstücks geklemmt werden, und wobei Enden der Zugträger nach Austritt aus dem Klemmbereich von umgebendem Gurtmaterial freigelegt und durch Vergießen mit einem Vergussmaterial festgelegt werden, wobei ein Vergussblock gebildet wird, der sich gegen die Formstücke abstützt, wobei erfindungsgemäß jeder Endabschnitt des Fördergurts getrennt vergossen und für jeden Endabschnitt des Fördergurts ein eigener, getrennter Vergussblock gebildet wird.

Es kann vorgesehen sein, dass das Vergussmaterial in einen um die Enden der Zugträger herum angeordneten Vergusskasten gegossen wird.

Zweckmäßigerweise werden die Enden der Zugträger jeweils eines Endabschnitts des Fördergurts vor dem Vergießen miteinander verbunden, bspw. durch Spleißen, Verrödeln und/oder mittels Seilklemmen.

Bevorzugt ist vorgesehen, dass das Vergießen der Enden der Zugträger und die Bildung der Vergussblöcke erfolgt, bevor die Endabschnitte des Fördergurts mittels der Formstücke unter Bildung eines endlosen Fördergurts miteinander verbunden werden.

Weitere Vorteile und Merkmale der Erfindung ergeben sich aus der nachfolgenden Beschreibung eines Ausführungsbeispiels, wobei auf eine Zeichnung Bezug genommen wird, in der
- Fig. 1: eine perspektivische Ansicht einer erfindungsgemäßen Klemmverbindung zum Verbinden zweier Endabschnitte eines Fördergurts zeigt,
- Fig. 2: eine Seitenansicht der Klemmverbindung nach Fig. 1 zeigt,
- Fig. 3: eine Draufsicht auf die Klemmverbindung nach Fig. 1 und 2 zeigt, und
- Fig. 4: eine Klemmverbindung nach dem Stand der Technik zeigt.

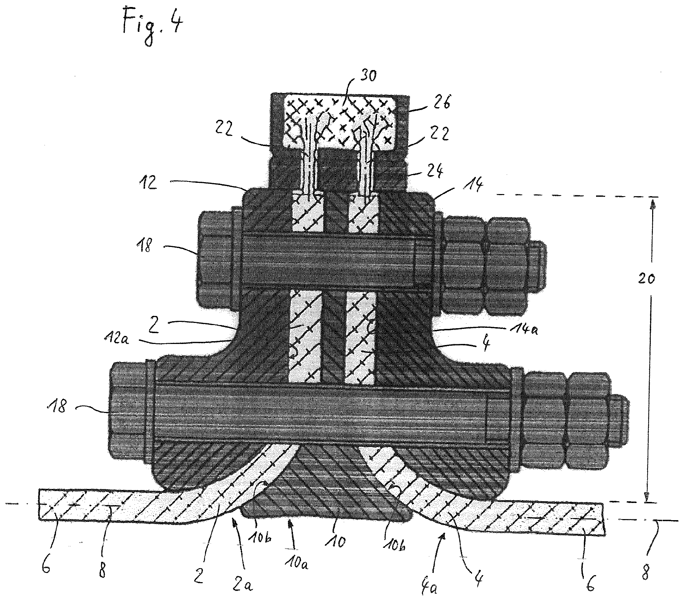

Bei der in Figur 4 dargestellten Klemmverbindung nach dem Stand der Technik sind zwei Endabschnitte 2, 4 eines endlos einzurichtenden Fördergurts 6, insbesondere für ein Gurtbecherwerk, in einem abgerundeten Umlenkbereich 2a, 4a im Wesentlichen rechtwinklig aus einer Verlaufsebene 8 des Fördergurts 6 herausgeführt. Anschließend an den Umlenkbereich 2a, 4a verlaufen die Endabschnitte 2, 4 eben. Zwischen die Endabschnitte 2, 4 ist ein beiderseits abgerundetes Zwischenstück 10 eingesetzt, das die beiden Endabschnitte bei deren Abwinkelung führt.

In der Verlaufsebene 8 des Fördergurts 6 weist das Zwischenstück 10 eine konkave Anlagefläche 10a auf, um sich einer Krümmung von Umlenk- oder Antriebstrommeln des Fördergurts anzupassen.

Einander in Bezug auf die Endabschnitte 2, 4 des Fördergurts 6 gegenüberliegend angeordnete Formstücke 12, 14 weisen abgerundete Anlageflächen 12a, 14a auf, mit denen die Formstücke 12, 14 gegen eine Seite des Fördergurts 6 anliegen. Entsprechend geformte, abgerundete Anlageflächen 10b des Zwischenstücks 10 liegen gegen eine gegenüberliegende Seite des Fördergurts 6 an, so dass die Endabschnitte 2, 4 zwischen den abgerundeten Anlageflächen der Formstücke 12, 14 und des Zwischenstücks 10 formschlüssig aufgenommen sind.

Die Anlageflächen 12a, 14a sowie 10b können in dem der Verlaufsebene 8 benachbarten Umlenkbereich im Querschnitt viertelkreisförmig gekrümmt sein und weisen daran anschließend einen ebenen Bereich auf, in dem die Endabschnitte 2, 4 des Fördergurts 6 eben und senkrecht zur Verlaufsebene 8 verlaufen.

Die Endabschnitte 2, 4 des Fördergurts 6 sind in einem Klemmbereich 20 zwischen den Anlageflächen 10b des Zwischenstücks 10 und den Anlageflächen 12a, 14a der Formstücke 12, 14 durch eine geeignete Verspannung der Formstücke 12, 14 klemmend gehalten, wobei die Verspannwirkung vorliegend durch Schraubverbindungen 18 erzielt wird. Insbesondere sind zwei übereinanderliegende Reihen von Schraubverbindungen 18 vorgesehen, die jeweils mehrere in Querrichtung des Fördergurts 6 gesehen nebeneinander angeordnete Schrauben umfassen. Es können hochfeste Schrauben bzw. Bolzen, bspw. Dehnschrauben, vorgesehen sein, die die Formstücke, das Zwischenstück und die Endabschnitte des Fördergurts durchgreifen und mit einer geeigneten Vorspannung angezogen sein können.

Der Fördergurt 6 ist mit eingebetteten Zugträgern 22 versehen, die bspw. aus Stahlseilen gebildet sind, die in Gurtlängsrichtung angeordnet sind, wobei die Zugträger 22 nach Austritt aus dem Klemmbereich 20 von umgebendem Gurtmaterial befreit und somit freigelegt sind. Die freigelegten Enden der Zugträger 22 sind in einem Vergusskasten 26 aufgenommen, wobei zwischen den Formstücken 12, 14 und dem Vergusskasten 26 ein Abstützblech 24 angeordnet ist.

Die freigelegten Enden der Zugträger 22 beider Endabschnitte 2, 4 des Fördergurts sind mit einem Vergussmaterial vergossen, wobei das Vergussmaterial einen Vergussblock 30 bildet, der sich gegen die Formstücke 12, 14 abstützt. Das Vergussmaterial ist in den Vergusskasten 26 gegossen, so dass der Vergussblock 30 einstückig mit diesem und den freigelegten Endabschnitten der Zugträger 22 ausgebildet ist. Das Abstandsblech 24 ist mit dem Vergusskasten 26 verschweißt.

Die Enden der Zugträger 22 werden in der Regel miteinander verbunden, sei es durch Spleißen, Verrödeln und/oder durch Seilklemmen.

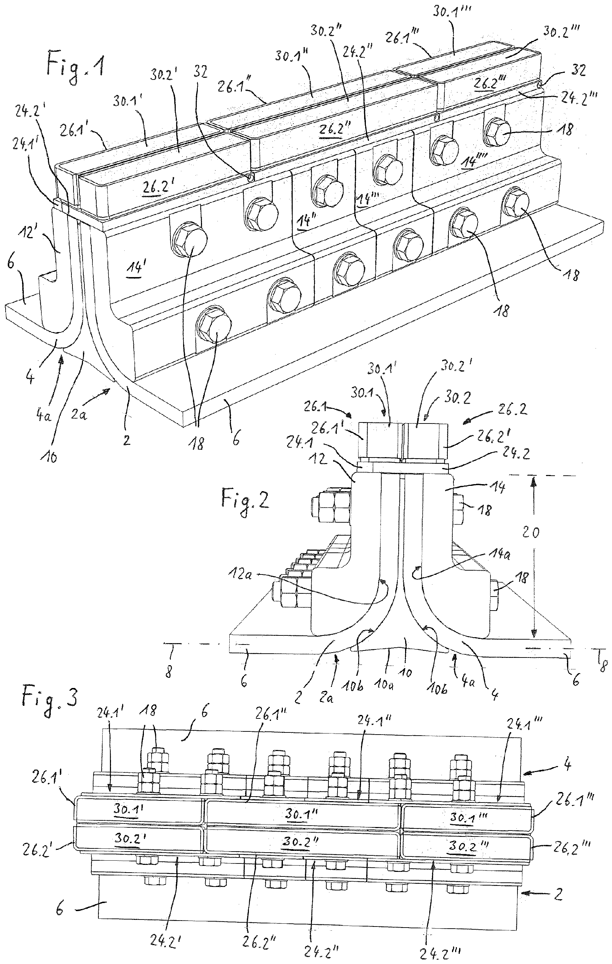

Fig. 1 bis 3 erläutern eine Klemmverbindung gemäß der Erfindung. Ähnlich wie beim Stand der Technik sind Endabschnitte 2, 4 eines Fördergurts 6 zwischen Formstücken 12, 14 und einem Zwischenstück 10 klemmend gehalten, wobei zwei Reihen von Schraubverbindungen 18 vorgesehen sind, die die Formstücke, das Zwischenstück und die Endabschnitte des Fördergurts durchgreifen. Das Zwischenstück 10 weist eine leicht konkav geformte oder gebogene Anlagefläche 10a auf, die zur Anlage an Antriebs- oder Umlenktrommeln des Fördergurts dient, sowie im Querschnitt annähernd viertelkreisförmig gebogene und anschließend ebene Anlageflächen 10b. Die Formstücke 12, 14 weisen entsprechende, zunächst im Querschnitt viertelkreisförmig gebogene und anschließend ebene Anlageflächen 12a, 14a auf, wobei die Endabschnitte 2, 4 des Fördergurts 6 jeweils in einem Klemmbereich 20 zwischen den Anlageflächen 10b des Zwischenstücks und den Anlageflächen 12a und 14a der Formstücke klemmend gehalten sind.

Die eingebetteten Zugträger des Fördergurts 6 sind im Anschluss an den Klemmbereich 20 von umgebendem Gurtmaterial befreit und somit freigelegt und, im Unterschied zum Stand der Technik, nicht in einem einzigen Vergussblock festgelegt, sondern in jeweils einem getrennten Vergussblock 30.1, 30.2 festgelegt, wobei ein Vergussblock je Endabschnitt des Fördergurts vorgesehen ist. Die eingebetteten Zugträger des einen Endabschnitts 2 des Fördergurts sind in dem Vergussblock 30.1 festgelegt, der in einem Vergusskasten 26.1 aufgenommen ist, und die Zugträger des anderen Endabschnitts 4 des Fördergurts 6 sind in dem Vergussblock 30.2 festgelegt, der in einem Vergusskasten 26.2 aufgenommen ist. Aufgrund dieser separaten Ausbildung jedes Endabschnitts 2, 4 des Fördergurts 6 ist es möglich, das Vergießen der Enden der Zugträger an jedem Endabschnitt fertigzustellen, bevor die so vorbereiteten Endabschnitte des Fördergurts mit Hilfe der Formstücke und des Zwischenstücks abschließend miteinander verbunden werden.

Ähnlich wie beim Stand der Technik ist ein Abstützblech 24 zwischen den Vergusskästen und den Formstücken vorgesehen, wobei das Abstützblech allerdings aus zwei Teilen oder Hälften 24.1, 24.2 gebildet ist, die jeweils von der Seite aufgeschoben sind und mittels einer Fixierschraube 32 aneinander gesichert sein können. Durch diese getrennte Ausbildung von Vergussblöcken, Vergusskästen und Abstützblech kann der Fördergut nicht nur in der beschriebenen Weise einfacher endlos verbunden werden, sondern die Klemmverbindung kann bspw. für Wartungs- oder Reparaturzwecke auch ohne Zerstörung eines Vergussblocks wieder gelöst werden.

Fig. 1 bis 3 zeigen einen weiteren Unterschied zum Stand der Technik, der darin besteht, dass jeder einzelne Vergussblock 30.1, 30.2, Vergusskasten 26.1, 26.2 und das Abstützblech 24 in Querrichtung des Fördergurts 6 gesehen in mehrere Teile unterteilt ist, im dargestellten Beispiel in drei nebeneinander angeordnete Vergussblockteile 30.1', 30.1", 30.1''' und 30.2', 30.2" und 30.2''', sowie Vergusskastenteile 26.1', 26.1", 26.1''' und 26.2', 26.2" und 26.2'''.

Weiterhin sind auch die Formstücke 12, 14 in Querrichtung des Fördergurts 6 gesehen in mehrere Abschnitte unterteilt, vorliegend in vier Formstückteile 12' bis 12"" und 14' bis 14"". Auch das Abstützblech 24.1, 24.2 ist in Querrichtung des Gurts gesehen in Teile 24.1', 24.1", 24.1'" und 24.2', 24.2", 24.2'" aufgeteilt, deren Breite der der Vergusskastenteile entspricht.

Die jeweilige Breite (Abmessung in Querrichtung des Fördergurts 6 gesehen) der einzelnen Vergusskastenteile, Abstützblechteile und Formstückteile ist bevorzugt unterschiedlich, um eine Überlappung zwischen Vergusskästen und Abstützblechen einerseits und den Formstücken andererseits zu erzielen, wie Fig. 1 zeigt.

### Bezugszeichenliste

- 2: Endabschnitt
- 2a: Umlenkbereich
- 4: Endabschnitt
- 4a: Umlenkbereich
- 6: Fördergurt
- 8: Verlaufsebene
- 10: Zwischenstück
- 10a, 10b: Anlagefläche
- 12: Formstück
- 12', 12", 12'", 12"": Formstückteil
- 12a: Anlagefläche
- 14: Formstück
- 14', 14", 14'", 14"": Formstückteil
- 14a: Anlagefläche
- 18: Schraubverbindung
- 20: Klemmbereich
- 22: Zugträger
- 24: Abstützblech
- 24.1,24.2: Abstützblechhälfte
- 24.1', 24.1", 24.1'": Abstützblechteil
- 24.2', 24.2", 24.2'": Abstützblechteil
- 26: Vergusskasten
- 26.1, 26.2: Vergusskasten
- 26.1', 26.1", 26.1'": Vergusskastenteil
- 26.2', 26.2", 26.2'": Vergusskastenteil
- 30: Vergussblock
- 30.1, 30.2: Vergussblock
- 30.1', 30.1", 30.1'": Vergussblockteil
- 30.2', 30.2", 30.2'": Vergussblockteil
- 32: Fixierschraube

## Patentansprüche

1. Klemmverbindung zum Verbinden zweier Endabschnitte (2, 4) eines endlos einzurichtenden, eingebettete Zugträger (22) aufweisenden Fördergurts (6), mit zwei gegeneinander verspannbaren, jeweils eine Anlagefläche (12a, 14a) für einen Endabschnitt (2, 4) des Fördergurts (6) aufweisenden Formstücken (12,14), zwischen denen ein Zwischenstück (10) angeordnet ist und jeweils ein Endabschnitt (2, 4) in einem Klemmbereich (20) zwischen dem Zwischenstück (10) und einer Anlagefläche (12a, 14a) eines Formstücks (12,14) klemmbar ist, und wobei Enden der Zugträger (22) in einem mit einem Vergussmaterial gebildeten, sich gegen die Formstücke (12,14) abstützenden Vergussblock festlegbar sind, **dadurch gekennzeichnet, dass** für jeden Endabschnitt (2, 4) des Fördergurts (6) ein eigener, getrennter Vergussblock (30.1, 30.2) gebildet ist.

2. Klemmverbindung nach Anspruch 1, **dadurch gekennzeichnet, dass** jeder Vergussblock (30.1, 30.2) in einem um die Enden der Zugträger (22) herum anzuordnenden Vergusskasten (26.1, 26.2) angeordnet ist.

3. Klemmverbindung nach Anspruch 1 oder 2, **dadurch gekennzeichnet, dass** jeweils zwischen einem Vergussblock (30.1, 30.2) oder Vergusskasten (26.1, 26.2) und einem Formstück (12,14) ein Abstützelement (24) angeordnet ist.

4. Klemmverbindung nach einem der vorangehenden Ansprüche, **dadurch gekennzeichnet, dass** die Formstücke (12, 14) mit diese durchgreifenden Schraubverbindungen (18) versehen und mittels dieser verspannbar sind.

5. Klemmverbindung nach einem der vorangehenden Ansprüche, **dadurch gekennzeichnet, dass** jeder Vergussblock (30.1, 30.2) in Querrichtung des Fördergurts (6) gesehen in mehrere, etwa zwei, drei, vier oder mehr einzelne Vergussblockteile (30.1' ...30.1'''; 30.2' ... 30.2''') unterteilt ist.

6. Klemmverbindung nach einem der vorangehenden Ansprüche, **dadurch gekennzeichnet, dass** jedes Formstück (12, 14) in Querrichtung des Fördergurts gesehen in mehrere, etwa zwei, drei, vier oder mehr Formstückteile (12'...12"", 14'... 14"") unterteilt ist.

7. Klemmverbindung nach Anspruch 5 und6, **dadurch gekennzeichnet, dass** die einzelnen Vergussblockteile (30.1' ...30.1'''; 30.2' ... 30.2''') eine Breite aufweisen, die kleiner oder größer als eine Breite eines einzelnen Formstückteils (12'...12"", 14' ... 14"") ist, um eine Überlappung zu erzielen.

8. Klemmverbindung nach einem der vorangehenden Ansprüche, **dadurch gekennzeichnet, dass** jeder Vergusskasten (26.1, 26.2) in Querrichtung des Fördergurts gesehen in mehrere, etwa zwei, drei, vier oder mehr Vergusskastenteile (26.1' ... 26.1'''; 26.2' ... 26.2''') unterteilt ist.

9. Klemmverbindung nach einem der vorangehenden Ansprüche, **dadurch gekennzeichnet, dass** jedes Abstützblechteil (24.1, 24.2) in Querrichtung des Fördergurts gesehen in mehrere, etwa zwei, drei, vier oder mehr Abstützblechteile (24.1' ... 24.1'''; 24.2' ... 24.2''') unterteilt ist.

10. Klemmverbindung nach einem der vorangehenden Ansprüche, **dadurch gekennzeichnet, dass** die Formstücke (12, 14) abgerundete Anlageflächen (12a, 14a) aufweisen.

11. Fördergurt (6), insbesondere für Gurtbecherwerke, mit eingebetteten Zugträgern (22) und zwei Endabschnitten (2, 4), die mittels einer Klemmverbindung nach einem der vorangehenden Ansprüche verbunden und dadurch der Fördergurt (6) endlos eingerichtet ist, wobei die Endabschnitte (2, 4) aus einer Verlaufsebene (8) des Fördergurts (6) herausgeführt sind und zwischen den Formstücken (12,14) und dem Zwischenstück (10) klemmend gehalten sind, **dadurch gekennzeichnet, dass** an beiden Endabschnitten (2, 4) des Fördergurts (6) die Zugträger (22) von umgebendem Gurtmaterial freigelegt und jeweils in einem eigenen, getrennten, mit einem Vergussmaterial gefüllten Vergussblock (30.1, 30.2) festgelegt sind.

12. Fördergurt nach Anspruch 11, **dadurch gekennzeichnet, dass** die Zugträger (22) jeweils eines Endabschnitts (2, 4) des Fördergurts (6) innerhalb des diesem Endabschnitt (2, 4) zugeordneten Vergussblocks (30.1, 30.2) miteinander verbunden sind.

13. Fördergurt nach Anspruch 11 oder 12, **dadurch gekennzeichnet, dass** die Zugträger (22) jeweils eines Endabschnitts (2, 4) durch Spleißen, Verrödeln und/oder mittels Seilklemmen miteinander verbunden sind.

14. Verfahren zum Verbinden zweier Endabschnitte (2, 4) eines endlos einzurichtenden Fördergurts (6), der mit eingebetteten Zugträgern (22) versehen ist, wobei die Endabschnitte (2, 4) aus einer Verlaufsebene (8) des Fördergurts (6) herausgeführt werden und zwei mit Anlageflächen (12a, 14a) versehene Formstücke (12, 14) aufgesetzt und verspannt werden, wobei zwischen den Formstücken (12, 14) ein Zwischenstück (10) angeordnet wird und die Endabschnitte (2, 4) jeweils in einem Klemmbereich (20) zwischen dem Zwischenstück (10) und einer Anlagefläche (12a, 14a) eines Formstücks (12,14) geklemmt werden, und wobei Enden der Zugträger (22) nach Austritt aus dem Klemmbereich (20) von umgebendem Gurtmaterial freigelegt und durch Vergießen mit einem Vergussmaterial festgelegt werden, wobei ein Vergussblock (30.1, 30.2) gebildet wird, der sich gegen die Formstücke (12, 14) abstützt, **dadurch gekennzeichnet, dass** jeder Endabschnitt (2, 4) des Fördergurts (6) getrennt vergossen und für jeden Endabschnitt (2, 4) ein eigener, getrennter Vergussblock (30.1, 30.2) gebildet wird.

15. Verfahren nach Anspruch 14, **dadurch gekennzeichnet, dass** das Vergussmaterial in einen um die Enden der Zugträger (22) herum angeordneten Vergusskasten (26.1, 26.2) gegossen wird.

16. Verfahren nach Anspruch 14 oder 15, **dadurch gekennzeichnet, dass** die Enden der Zugträger (22) jeweils eines Endabschnitts (2, 4) des Fördergurts (6) vor dem Vergießen miteinander verbunden werden.

17. Verfahren nach einem der Ansprüche 14 bis 16, **dadurch gekennzeichnet, dass** das Vergießen der Enden der Zugträger (22) und die Bildung der Vergussblöcke (30.1, 30.2) erfolgt, bevor die Endabschnitte (2, 4) des Fördergurts (6) mittels der Formstücke (12, 14) unter Bildung eines endlosen Fördergurts miteinander verbunden werden.

## Claims

1. Clamped connection for joining two end sections (2, 4) of a conveyor belt (6) which is to be set up as continuous and which has embedded tension members (22), with two moulded pieces (12, 14) which can be braced against one another and which in each case have a contact surface (12a, 14a) for an end section (2, 4) of the conveyor belt (6), arranged between which is a spacer (10), and in each case an end section (2, 4) can be clamped in a clamping area (20) between the spacer (10) and a contact surface (12a, 14a) of a moulded piece (12, 14), and wherein ends of the tension members (22) can be secured in a cast block which is formed with a casting material and which is braced against the moulded pieces (12, 14), **characterised in that** its own separate cast block (30.1,30.2) is formed for each end section (2, 4) of the conveyor belt (6).

2. Clamped connection according to claim 1, **characterised in that** each cast block (30.1, 30.2) is arranged in a casting box (26.1, 26.2) that is to be arranged around the ends of the tension members (22).

3. Clamped connection according to claim 1 or 2, **characterised in that** in each case a support element (24) is arranged between a cast block (30.1, 30.2) or casting box (26.1, 26.2) and a moulded piece (12, 14).

4. Clamped connection according to one of the preceding claims, **characterised in that** the moulded pieces (12, 14) are equipped with screw connections (18) that penetrate through them and by means of which they can be secured in place.

5. Clamped connection according to one of the preceding claims, **characterised in that** each cast block (30.1, 30.2), as viewed in the transverse direction of the conveyor belt (6), is divided into several individual cast block sections (30.1' ...30.1"'; 30.2' ... 30.2"'), for example two, three, four or more.

6. Clamped connection according to one of the preceding claims, **characterised in that** each moulded piece (12, 14), as viewed in the transverse direction of the conveyor belt, is divided into several moulded piece sections (12'...12"", 14'... 14""), for example two, three, four or more.

7. Clamped connection according to claim 5 and 6, **characterised in that** the individual cast block sections (30.1' ...30.1'''; 30.2' ... 30.2''') are of a width that is smaller or greater than a width of an individual moulded piece section (12'...12"", 14' ... 14""), in order to achieve an overlap.

8. Clamped connection according to one of the preceding claims, **characterised in that** each casting box (26.1, 26.2), as viewed in the transverse direction of the conveyor belt, is divided into several casting box sections (26.1' ... 26.1"'; 26.2' ... 26.2'''), for example two, three, four or more.

9. Clamped connection according to one of the preceding claims, **characterised in that** each support plate section (24.1, 24.2), as viewed in the transverse direction of the conveyor belt, is divided into several support plate sections (24.1' ... 24.1'''; 24.2' ... 24.2'''), for example two, three, four or more.

10. Clamped connection according to one of the preceding claims, **characterised in that** the moulded pieces (12, 14) have rounded contact surfaces (12a, 14a).

11. Conveyor belt (6), in particular for belt-and-bucket elevators, with embedded tension members (22) and two end sections (2, 4), which are joined by means of a clamped connection according to one of the preceding claims and thereby the conveyor belt (6) is set up to be continuous, wherein the end sections (2, 4) are led out of a plane of travel (8) of the conveyor belt (6) and are held clamped between the moulded pieces (12,14) and the spacer (10), **characterised in that** at both end sections (2, 4) of the conveyor belt (6), the tension members (22) are exposed from the surrounding belt material and in each case are secured in their own separate cast blocks (30.1,30.2) filled with a casting material.

12. Conveyor belt according to claim 11, **characterised in that** the tension members (22) of each end section (2, 4) of the conveyor belt (6) are joined to one another within the cast block (30.1, 30.2) allocated to this end section (2, 4).

13. Conveyor belt according to claim 11 or 12, **characterised in that** the tension members (22) of each end section (2, 4) are joined to one another through splicing, binding and/or by means of rope clamping.

14. Method for joining two end sections (2, 4) of a conveyor belt (6) which is to be set up as continuous and which is equipped with embedded tension members (22), wherein the end sections (2, 4) are led out of a plane of travel (8) of the conveyor belt (6), and two moulded pieces (12, 14) equipped with contact surfaces (12a, 14a) are placed on and secured, wherein a spacer (10) is arranged between the moulded pieces (12, 14) and the end sections (2, 4) are respectively clamped in a clamping area (20) between the spacer (10) and a contact surface (12a, 14a) of a moulded piece (12, 14), and wherein after emerging from the clamping area (20), the ends of the tension members (22) are exposed from the surrounding belt material and are secured through casting with a casting material, wherein a cast block (30.1, 30.2) is formed which rests against the moulded pieces (12, 14), **characterised in that** each end section (2, 4) of the conveyor belt (6) is cast separately, and its own separate cast block (30.1, 30.2) is formed for each end section (2, 4).

15. Method according to claim 14, **characterised in that** the casting material is poured into a casting box (26.1, 26.2) arranged around the ends of the tension members (22).

16. Method according to claim 14 or 15, **characterised in that** the ends of the tension members (22) of each end section (2, 4) of the conveyor belt (6) are joined to one another before casting.

17. Method according to one of the claims 14 to 16, **characterised in that** the casting of the ends of the tension members (22) and the formation of the cast blocks (30.1,30.2) takes place before the end sections (2, 4) of the conveyor belt (6) are connected to one another by means of the moulded pieces (12, 14) to form a continuous conveyor belt.

## Revendications

1. Connexion par serrage permettant d'assurer la jonction de deux sections d'extrémité (2,4) d'une bande de convoyage (6) qui doit être mise en place de manière continue et qui comporte des éléments de tension encastrés (22), avec deux éléments moulés (12, 14) qui peuvent s'appuyer l'un contre l'autre et qui, dans chaque cas, ont une surface de contact (12a, 14a) pour une section d'extrémité (2, 4) de la bande de convoyage (6), avec insertion entre eux d'une entretoise (10) et, dans chaque cas, une section d'extrémité (2, 4) peut se fixer dans une zone de serrage (20) entre l'entretoise (10) et une surface de contact (12a, 14a) d'un élément moulé (12, 14), et les extrémités des éléments de tension (22) peuvent se fixer dans un bloc coulé qui est formé à partir d'un matériau de coulage et qui vient s'appuyer contre les éléments moulés (12, 14), et **se caractérisant par le fait que** son propre bloc coulé distinct (30.1, 30.2) est profilé pour chaque section d'extrémité (2, 4) de la bande de convoyage (6).

2. La connexion par serrage que décrit la revendication 1, si ce n'est que chaque bloc coulé (30.1, 30.2) est implanté dans un caisson de moulage (26.1, 26.2) qui doit se positionner autour des extrémités des éléments de tension (22).

3. La connexion par serrage que décrit la revendication 1 ou 2, si ce n'est que, dans chaque cas, un élément de support (24) vient s'insérer entre un bloc coulé (30.1, 30.2) ou un caisson de moulage (26.1, 26.2) et un élément moulé (12, 14).

4. La connexion par serrage que décrit l'une ou l'autre des revendications précédentes, si ce n'est que les éléments moulés (12, 14) sont équipés de connexions vissées (18) qui y pénètrent et qui permettent leur immobilisation en position.

5. La connexion par serrage que décrit l'une ou l'autre des revendications précédentes, si ce n'est que chaque bloc coulé (30.1, 30.2), lorsque ces blocs sont vus dans le sens transversal de la bande de convoyage (6), se divise en plusieurs sections individuelles de bloc coulé (30.1' ...30.1'''; 30.2' ... 30.2'''), par exemple, deux, trois, quatre ou plus.

6. La connexion par serrage que décrit l'une ou l'autre des revendications précédentes, si ce n'est que chaque élément moulé (12, 14), lorsque ces éléments sont vus dans le sens transversal de la bande de convoyage, se divise en plusieurs sections individuelles d'éléments moulés (12'...12"", 14'... 14""), par exemple, deux, trois, quatre ou plus.

7. La connexion par serrage que décrivent les revendications 5 et 6, si ce n'est que les sections individuelles de bloc coulé (30.1' ...30.1'''; 30.2' ... 30.2''') ont une largeur inférieure ou supérieure à la largeur d'une section individuelle d'éléments moulés (12'...12"", 14' ... 14""), afin de créer un chevauchement.

8. La connexion par serrage que décrit l'une ou l'autre des revendications précédentes, si ce n'est que chaque caisson de moulage (26.1, 26.2), lorsque ces éléments sont vus dans le sens transversal de la bande de convoyage, se divise en plusieurs sections de caisson de moulage (26.1' ... 26.1"'; 26.2' ... 26.2'''), par exemple, deux, trois, quatre ou plus.

9. La connexion par serrage que décrit l'une ou l'autre des revendications précédentes, si ce n'est que chaque section de plaque support (24.1, 24.2), lorsque ces éléments sont vus dans le sens transversal de la bande de convoyage, se divise en plusieurs sections de plaque support (24.1' ... 24.1'''; 24.2' ... 24.2'''), par exemple, deux, trois, quatre ou plus.

10. La connexion par serrage que décrit l'une ou l'autre des revendications précédentes, si ce n'est que les éléments moulés (12, 14) ont des surfaces arrondies de contact (12a, 14a).

11. Une bande de convoyage (6), conçue, en particulier pour des élévateurs à bande et godets et équipée d'éléments encastrés de tension (22) et de deux sections d'extrémité (2,4), qui se raccordent les uns aux autres par le biais d'une connexion par serrage, que décrit l'une ou l'autre des revendications précédentes, si ce n'est que la bande de convoyage (6) est mise en place de manière continue, et ces sections d'extrémité(2, 4) sortent du plan de déplacement (8) de la bande de convoyage (6) et viennent se fixer entre les éléments moulés (12, 14) et l'entretoise (10), et **se caractérisant par le fait qu'**au niveau des deux sections d'extrémité (2, 4) de la bande de convoyage (6), les éléments de tension (22) sont visibles par rapport au matériau entourant la bande et, dans chaque cas, viennent se fixer dans leurs propres blocs coulés séparés (30.1, 30.2) remplis d'un matériau de moulage.

12. La bande de convoyage que décrit la revendication 11, si ce n'est que les éléments de tension (22) de chaque section d'extrémité (2, 4) de la bande de convoyage (6) viennent se raccorder les uns aux autres à l'intérieur du bloc coulé (30.1, 30.2) affecté à cette section d'extrémité (2, 4).

13. La bande de convoyage que décrit la revendication 11 ou 12, si ce n'est que les éléments de tension (22) de chaque section d'extrémité (2, 4) viennent se raccorder les uns aux autres par un épissage, des liens et (ou) une fixation à l'aide de filins.

14. Le procédé de raccordement de deux sections d'extrémité (2, 4) d'une bande de convoyage (6) qui est mise en place de manière continue et qui est équipée de membres encastrés de tension (22), et ces sections d'extrémité (2, 4) sortent du plan de déplacement (8) de la bande de convoyage (6) et deux éléments moulés (12,14) équipés de surfaces de contact (12a, 14a) sont mis en place et fixés et une entretoise (10) vient s'implanter entre les éléments moulés (12, 14) et les sections d'extrémité (2, 4) viennent, respectivement, se fixer dans une zone de serrage (20) entre l'entretoise (10) et une surface de contact (12a, 14a) d'un élément moulé (12, 14) et, après leur sortie de cette zone de serrage (20), les extrémités des éléments de tension (22) sont visibles par rapport au matériau entourant la bande et viennent se fixer par coulage d'un matériau de moulage, et un bloc coulé (30.1, 30.2) est mis en forme et repose contre les éléments moulés (12, 14), **se caractérisant par le fait que** chaque section d'extrémité (2, 4) de la bande de convoyage (6) est coulée séparément et que son propre bloc coulé séparé (30.1, 30.2) est mis en forme pour chaque section d'extrémité (2,4).

15. Le procédé que décrit la revendication 14, si ce n'est que le matériau de moulage est versé dans un caisson de moulage (26.1, 26.2) positionné autour des extrémités des éléments de tension (22).

16. Le procédé que décrit la revendication 14 ou 15, si ce n'est que les extrémités des éléments de tension (22) de chaque section d'extrémité (2, 4) de la bande de convoyage (6) viennent se raccorder les unes aux autres avant ce moulage.

17. Le procédé que décrit l'une ou l'autre des revendications 14 à 16, si ce n'est que le moulage des extrémités des éléments de tension (22) et la formation des blocs coulés (30.1, 30.2) s'effectuent avant que les sections d'extrémités (2,4) de la bande de convoyage (6) ne soient raccordées les unes aux autres par le biais des éléments moulés (12,14) afin de former une bande de convoyage continue.
